# EUROPÄISCHE PATENTSCHRIFT

(11) **EP 0 842 395 B1**
(45) Veröffentlichungstag und Bekanntmachung des Hinweises auf die Patenterteilung: **30.08.2000**
(21) Anmeldenummer: 96927054.5
(22) Anmeldetag: 26.07.1996
(51) Int. Cl.: G01C 1/04, G01S 3/786, G06T 7/60

(54) **VERFAHREN UND VORRICHTUNG ZUR SCHNELLEN ERFASSUNG DER LAGE EINER ZIELMARKE**
PROCESS AND DEVICE FOR THE RAPID DETECTION OF THE POSITION OF A TARGET MARKING
PROCEDE ET DISPOSITIF DE DETECTION RAPIDE DE LA POSITION D'UN REPERE CIBLE

(30) Priorität: 03.08.1995 DE 19528465
(43) Veröffentlichungstag der Anmeldung: 20.05.1998
(73) Patentinhaber: Leica Geosystems AG, 9435 Heerbrugg (CH)
(72) Erfinder: BAYER, Gerhard, D-88131 Lindau (DE); HINDERLING, Jürg, CH-9437 Marbach (CH); GHESLA, Helmut, A-6971 Hard (AT)
(74) Vertreter: Stamer, Harald, Dipl,-Phys.
(86) Internationale Anmeldenummer: EP9603308
(87) Internationale Veröffentlichungsnummer: WO9706409

(56) Entgegenhaltungen:
- EP-A- 0 661 519
- IEEE TRANSACTIONS ON PATTERN ANALYSIS AND MACHINE INTELLIGENCE, JAN. 1980, USA, Bd. PAMI-2, Nr. 1, ISSN 0162-8828, Seiten 47-56, XP002018673 GILBERT A L ET AL: "A real-time video tracking system"
- PATENT ABSTRACTS OF JAPAN vol. 95, no. 003 & JP,A,07 085286 (FUJITSU LTD), 31.März 1995,

## Beschreibung

Die Erfindung betrifft ein Verfahren und eine Vorrichtung zur schnellen Erfassung der Lage einer Zielmarke mit Hilfe eines Theodoliten mit einem ortsauflösenden optoelektronischen Detektor mit matrixförmig angeordneten Pixeln, wobei
a) die Zielmarke eine Strahlung emittiert oder reflektiert,
b) die von der Zielmarke kommende Strahlung von der Abbildungsoptik und dem Detektor des Theodoliten aufgenommen wird und
c) die Detektorsignale ausgewertet werden.

In IEEE Transactions on Pattern Analyses and Machine Intelligence, Jan'80, USA, vol.PAMI-2 (1980), pp.47-56, Gilbert e.a.: "A Real-Time Video Tracking System" wird ein Video-Trackingsystem beschrieben, das Ziele wie Raketen oder Flugzeuge identifizieren und verfolgen kann. Hierzu wird eine hochwertige Optik mit Autofocus-Funktion und mit einem elektronischen Bildverstärker eingesetzt. Das Kamerabild wird durch einen Videoprozessor in Hintergrund, Vordergrund und Ziel zerlegt, während anschließend ein Projektionsprozessor die Struktur der Zielregion zur Zielerkennung analysiert, wobei ein Vergleich mit abgespeicherten Zielobjektdaten erfolgt. Die Zielidentifikation und -verfolgung wird mittels adaptiver, projektionsbezogener Algorithmen durchgeführt, die eine Klassifikation der komplexen, sich schnell ändernden Hintergrund/Nordergrund-Situation ermöglichen. Solche Klassifikationsalgorithmen eignen sich besonders für die von den Zielen kommende Streustrahlung gegenüber dem Hintergrund.

Aus Patent Abstracts of Japan, vol.95, no.003; JP-A-07 85286 ist ein Verfahren bekannt, mit dem mittels eines Bildprozessors ein Videosignal für ein Ziel während des horizontalen Scannens binärisiert und mit einem Fenster verknüpft wird und daraus ein Histogramm zur Separation des Hintergrundes vom Ziel und zur Positionsbestimmung des Ziels gebildet wird.

In EP-A-0 661 519 wird ein Vermessungsinstrument beschrieben, mit dem die Position des Mittelpunktes eines Ziels durch Differenzbildung der Bildaufnahmen des Ziels mit und ohne Blitzlicht detektiert wird.

Weitere Verfahren und Vorrichtungen sind bekannt aus der Zeitschrift 'Technische Rundschau' Nr. 39,1988,S.14-18, "Theodolitsysteme für industrielle und geodätische Messungen", W. Huep, O. Katowski und in der Zeitschrift 'Opticus' Nr.1/94,S.8-9 der Fa. Leica AG, "Theodolite-Sensoren für die industrielle Vermessung".

In diesen Veröffentlichungen wird der Einsatz solcher Verfahren und Vorrichtungen im geodätischen Vermessungswesen, in der Bauvermessung und in der industriellen Meßtechnik beschrieben. Es geht im allgemeinen darum, die dreidimensionalen Koordinaten von Punkten im Raum zu bestimmen. An diesen Punkten werden Zielmarken, z.B. oberflächenreflektierende Kugeln, Reflexfolien oder strahlungsemittierende Zielmarken in Stellung gebracht und diese mit einem Theodolitfernrohr anvisiert. Bei der dreidimensionalen Koordinatenbestimmung ist die Triangulation oder die Polarmethode gebräuchlich. Bei der Triangulation zielen zwei Theodolite mit bekanntem Abstand voneinander auf die Zielmarken und ermitteln die horizontalen und vertikalen Winkel bezüglich ihrer Basislinie. Für die Polarmethode wird ein Tachymeter eingesetzt, das aus einem Theodoliten mit einem integrierten Entfernungsmesser besteht. Aus der Winkel- und Entfernungsbestimmung errechnen sich ebenfalls die dreidimensionalen Koordinaten der Zielmarke.

Neben der Bestimmung und Aufzeichnung von Koordinaten können auch umgekehrt Koordinaten, die in einem Plan aufgezeichnet sind oder aus einer Karte entnommen werden können, vor Ort abgesteckt werden. Beispielsweise wird im Straßenbau die Trassenführung mittels Theodoliten oder eines Tachymeters und einer mit einer Zielmarke versehenen Latte abgesteckt. Dabei werden als Bedienpersonal mindestens zwei Personen benötigt, die sich durch Handzeichen oder per Funk verständigen. Zum einen werden die nach Plan vorgegebenen Koordinaten am Vermessungsinstrument eingestellt, während zum anderen die Latte mit der Zielmarke solange bewegt wird, bis die Zielmarke die Sollkoordinaten erreicht hat.

Als quasi-kontinuierliches Abstecken können Anwendungen betrachtet werden, bei denen Vortriebsmaschinen im Straßenbau oder auch im Tunnel- oder Bergbau eine bestimmte Bahn einhalten sollen. Diese Maschinen, an denen eine Zielmarke angebracht wird, werden mit Hilfe eines Theodoliten gesteuert. Dabei werden Abweichungen von der Sollrichtung beim Vortrieb der Maschinen aufgrund von abweichenden Horizontal- oder Vertikalwinkeln erkannt.

Bei modernen Vermessungsinstrumenten wird die visuelle Beobachtung der Zielmarke über das Theodolitfernrohr durch eine elektronische Aufnahme der Zielmarke unterstützt. Es werden Videokameras eingesetzt oder ortsauflösende optoelektronische Detektoren wie beispielsweise zweidimensionale CCD-Arrays, die in der Abbildungsoptik des Theodoliten integriert sind. Ein solches System ist außer in der o.g. Literatur auch in der DE 34 24 806 C2 beschrieben. Mit Hilfe der Bildverarbeitung werden zunächst die Koordinaten des Zielmarkenbildes im Koordinatensystem des ortsauflösenden Detektors bestimmt. Aus diesen bechnen sich auf der Grundlage einer Kalibrierung die Ablagewinkel, aus denen wiederum in herkömmlicher Weise nach der Triangulation oder der Polarmethode die dreidimensionalen Koordinaten der Zielmarke im Raum errechnet werden.

Nachteilig bei der Bildverarbeitung ist der erhebliche Verarbeitungszeitaufwand aufgrund der großen Datenmengen der Bildinformation. Jedes Pixel eines CCD-Arrays liefert einen Intensitätswert, der in einen Rechner, meist einen PC, übertragen wird. Da die Anzahl der Pixel bei vielen CCD-Arrays in der Größenordnung 1 Mio. liegt, ist es ein Problem, wenn das CCD-Array pro Sekunde sehr oft ausgelesen werden soll und somit viele Bilder pro Sekunde in den Rechner zur Auswertung übertragen werden und zugleich ausgewertet werden sollen. Dies ist aber gerade notwendig für eine automatische Erfassung einer Zielmarke oder Ihrer automatischen Verfolgung. Selbst mit den heute erhältlichen, schnell arbeitenden Mikroprozessoren ist eine solche Bildverarbeitung für derartige Zwecke zeitlich nicht möglich.

Deshalb liegt der Erfindung die Aufgabe zugrunde, ein Verfahren und eine Vorrichtung anzugeben, um mit geringem Aufwand in kurzer Zeit eine Zielmarke automatisch zu erfassen, ihre Koordinaten zu bestimmen, ihre Bewegung zu verfolgen und die Bahndaten zu registrieren.

Die Aufgabe wird dadurch gelöst, daß die Detektorsignale einer Vorverarbeitungseinheit zugeführt werden und daß in der Vorverarbeitungseinheit die von den Pixeln des Detektors detektierten Strahlungsintensitäten zeilenweise und spaltenweise aufsummiert werden, daß aus den Summen der Zeilen eine Zeilensummenfunktion und aus den Summen der Spalten eine Spaltensummenfunktion gebildet wird und daß aus der Schwerpunktsbestimmung der Zeilen- und Spaltensummenfunktion die zweidimensionalen Bildkoordinaten der Zielmarke im Koordinatensystem des Detektors ermittelt werden. Weiterhin wird die Aufgabe durch die Vorrichtungsansprüche 10 und 12 gelöst. Vorteilhafte Ausgestaltungen der Erfindung ergeben sich aus den abhängigen Ansprüchen 2 bis 9, 11, 13 und 14.

Für die Erfindung werden kooperative Zielmarken eingesetzt. Kooperative Zielmarken sind entweder mit Strahlungsquellen ausgerüstet, die Licht vorzugsweise im infraroten oder sichtbaren Wellenlängenbereich emittieren, oder es werden reflektierende Zielmarken verwendet, die von einer Strahlungsquelle beleuchtet werden. Diese kann im Theodoliten integriert sein und ebenfalls im infraroten oder sichtbaren Wellenlängenbereich emittieren.

Das von der Zielmarke emittierte oder reflektierte Licht wird von der Abbildungsoptik des Theodoliten aufgenommen und auf einem ortsempfindlichen optoelektronischen Detektor abgebildet. Die Abbildung besteht aus einem Lichtfleck mit einer bestimmten Intensitätsverteilung. Diese wird von den lichtempfindlichen Strukturen des Detektors ortsaufgelöst aufgenommen. Bei CCD-Arrays sind die lichtempfindliche Strukturen als Pixel matrixförmig, also zeilen- und spaltenweise, angeordnet. Die aus dem Detektor ausgelesenen elektrischen Signale entsprechen der Intensitätsverteilung des Lichtflecks. Die elektrischen Signale werden in eine mit dem Detektor verbundene Vorverarbeitungseinheit eingelesen.

Das Pixelbild der Zielmarke wird mittels einer entsprechend ausgelegten Hardware in der Vorverarbeitungseinheit erfindungsgemäß in zwei Summenfunktionen aufgetrennt. Dazu werden zunächst die Intensitätswerte aller Pixel einer Zeile aufaddiert. Sie bilden einen zu dieser Zeile gehörigen Summenwert. Die Summenwerte aller Zeilen ergeben in Abhängigkeit der Zeilennummer eine Zeilen-Summenfunktion. Nach bekannten mathematischen Methoden wird der Schwerpunkt der Zeilen-Summenfunktion bestimmt, der somit einen Koordinatenwert im Koordinatensystem des Detektors liefert. In analoger Weise werden die Intensitätswerte der Pixel einer jeden Spalte aufaddiert. Aus der so entstehenden Spalten-Summenfunktion wird ebenfalls der Schwerpunkt und somit die zweite Koordinate im Koordinatensystem des Detektors berechnet. Dadurch sind die zweidimensionalen Bildkoordinaten der Zielmarke auf dem Detektor bestimmt.

Aufgrund von Kalibrierwerten werden die zweidimensionalen Bildkoordinaten der Zielmarke in einen horizontalen und einen vertikalen Winkel umgerechnet. Die Winkel beziehen sich auf eine Zielachse, die z.B. die optische Achse der Abbildungsoptik des Theodoliten sein kann. Die Zielachse selbst ist in einem definierten globalen Koordinatensystem gegeben.

Die erfindungsgemäße Auswertung des Zielmarkenbildes bedeutet eine drastische Datenreduktion. Anstelle vieler Pixelwerte brauchen nur noch die Summenfunktionen oder gegebenenfalls nur die Koordinaten des Zielmarkenbildes in eine externe Recheneinheit, wie einen PC, übertragen werden. Eine langwierige Auswertung aller Pixel im PC entfällt. Natürlich können die Daten auch in einer internen Recheneinheit, die direkt an die Vorverarbeitungseinheit gekoppelt ist, weiterverarbeitet werden.

Der erhebliche Zeitgewinn in der Erfassung einer Zielmarke kann einerseits dazu genutzt werden, daß die Zielmarke nur grob anvisiert zu werden braucht. Automatisch wird die Zielmarke erkannt und ihre Orts- oder Winkelkoordinaten bestimmt. Sie können beispielsweise auf einem Display dargestellt werden. Die Daten können von der Recheneinheit weiterverarbeitet oder abgespeichert werden. Das grobe Anzielen der Zielmarke ist über das Theodolitfemrohr oder über einen Diopter möglich. Im einfachsten Fall genügt sogar die Anzielung der Zielmarke über Kimme und Korn, die als Markierungen auf dem Theodoliten angebracht sein können. Dadurch kann das Femrohrokular entfallen.

Befindet sich die Zielmarke beim groben Anvisieren nicht sogleich im Erfassungsbereich der Abbildungsoptik, so kann ein Suchlauf gestartet werden. Dies setzt voraus, daß die Steh- und Kippachse des Theodoliten motorisiert sind. Durch einen Suchalgorithmus wird der Theodolit um diese Achsen bewegt, bis die Zielmarke von der Abbildungsoptik erfaßt und vom Detektor erkannt ist.

Der Suchvorgang und die anschließende Koordinatenmessung werden vollständig automatisch durchgeführt.

Es hat sich durch viele Tests herausgestellt, daß die Ortsauflösung bei der erfindungsgemäßen Koordinatenbestimmung der Zielmarke erstaunlich gut ist und den Anforderungen in den meisten Anwendungsfällen genügt. Falls trotzdem eine höhere Meßgenauigkeit gefordert wird, so kann diese durch längere Integrationszeiten, also Belichtungszeiten des Detektors, durch Mittelung über mehrere Bilder oder durch verfeinerte Kalibrierung oder Bildanalyse zur Fehlerreduzierung erreicht werden. Die erhöhte Meßgenauigkeit geht auf Kosten der Meßzeit. Deshalb ist es vorgesehen, daß der Detektor wahlweise im Videotakt oder mit einer der jeweiligen Applikation angepaßten Frequenz ausgelesen wird.

Weiterhin hat sich ergeben, daß sich aus dem Verlauf der Zeilen- und Spalten-Summenfunktionen auch unerwünschte Streulichtreflexe erkennen und eliminieren lassen. Streulichtreflexe kommen durch Reflexionen der Zielmarken- oder Beleuchtungsstrahlung an Oberflächen, wie z.B. an Gewässeroberflächen, zustande. Die unter anderen Winkeln in die Abbildungsoptik einfallenden Reflexionen führen zu Veränderungen im Verlauf der Summenfunktionen, die somit erkannt und korrigiert werden können.

Ebenso kann aus dem Verlauf der Summenfunktionen eine Übersteuerung des Detektors (blooming) ermittelt werden. Daraus lassen sich besser geeignete Belichtungsparameter errechnen und automatisch einstellen.

Es hat sich auch gezeigt, daß eine auf dem Detektor unscharf abgebildete Zielmarke ebenso sicher und präzise erfaßt werden kann wie eine scharf abgebildete Zielmarke. Somit genügt eine kostengünstige Abbildungsoptik mit geeignetem fest eingestellten Fokus.

Zusätzlich zur automatischen Erfassung einer Zielmarke ermöglicht die Erfindung auch eine automatische Verfolgung der Zielmarke, wenn diese beispielsweise von einem Absteckpunkt oder Meßpunkt zum nächsten bewegt wird. Zur Bedienung des gesamten Systems wird dabei nur noch eine Person benötigt, die die Zielmarke zu den abzusteckenden oder zu vermessenden Punkten trägt und dort in Stellung bringt. Der Theodolit folgt der sich bewegenden Zielmarke automatisch nach. Dazu nimmt der Detektor des Theodoliten das Zielmarkenbild laufend auf. Die Auslesefrequenz des Detektors ist dementsprechend eingestellt. Mindestens genauso schnell werden die Detektorsignale in der Vorverarbeitungseinheit ausgewertet und die Koordinaten des Zielmarkenbildes bestimmt. Bei sich verändernden Koordinaten des Zielmarkenbildes auf dem Detektor können bei vorhandenen Steh- und Kippachsenmotoren des Theodoliten diese so angesteuert werden, daß der Theodolit der Zielmarke automatisch nachgeführt wird. Dadurch bleibt das Zielmarkenbild stets auf der lichtempfindlichen aktiven Fläche des Detektors.

Falls während der Verfolgung der Zielmarke Hindernisse auftauchen, die den optischen Kontakt des Theodoliten zur Zielmarke unterbrechen, so kann durch einen geeigneten Suchalgorithmus die Zielmarke wieder erfaßt werden, wenn sie nach den Hindernissen wieder auftaucht. Es ist klar, daß für die beschriebene Verfolgung von Zielmarken die erfindungsgemäß schnelle Erfassung und Koordinatenbestimmung der Zielmarken unabdingbar ist.

Werden mit einem Entfernungsmesser, der im Theodoliten integriert sein kann, zusätzlich noch die Entfernungen zu einer sich bewegenden Zielmarke gemessen, so wird aus der stetigen Aufnahme der dreidimensionalen Koordinaten der Zielmarke die Bahn der Zielmarke beschrieben. Die Bahndaten können elektronisch abgespeichert oder auf einem Speichermedium permanent aufgezeichnet werden.

Ausführungsbeispiele sind in der Zeichnung schematisch dargestellt und werden anhand der Figuren 1-3 erläutert. Es zeigen schematisch:
- Fig.1: eine Anordnung von Theodolit und reflektierender Zielmarke,
- Fig.2: eine Anordnung von Theodolit und eine Strahlung emittierender Zielmarke,
- Fig.3: ein Zielmarkenbild mit zugehöriger Zeilen- und Spalten-Summenfunktion.

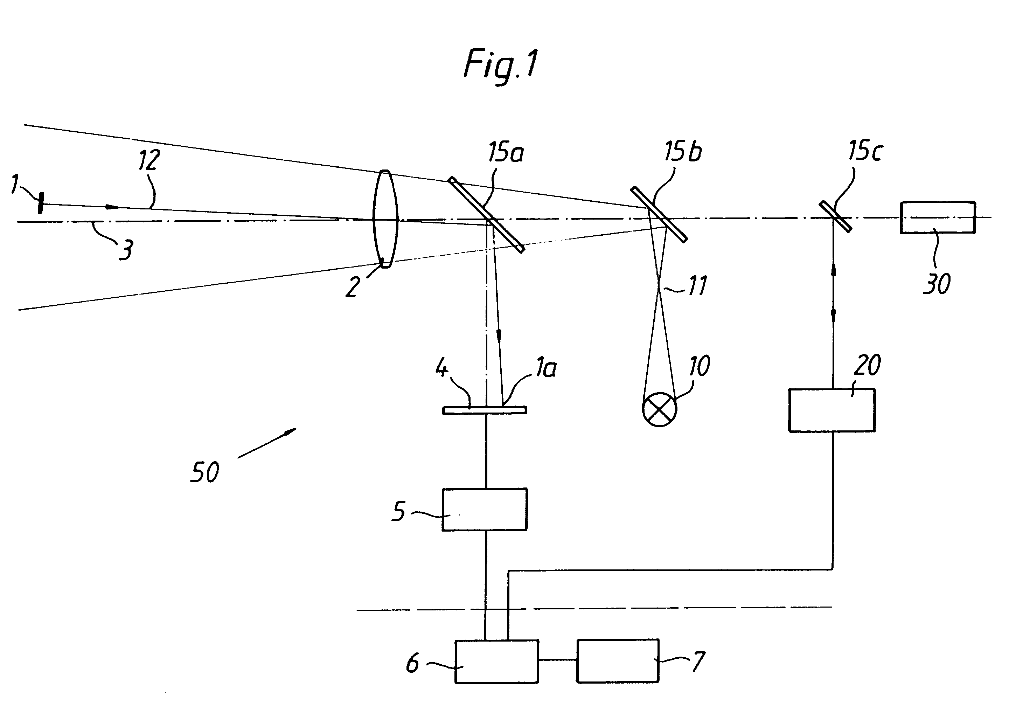

In Fig.1 ist der Aufbau eines Theodoliten 50 und eine reflektierende Zielmarke 1 schematisch dargestellt. Im Theodoliten 50 ist eine Strahlungsquelle 10 integriert. Ihre Strahlung 11 führt über einen Strahlenteiler 15b und einen Strahlenteiler 15a durch eine Abbildungsoptik 2. Dabei ist die Strahlung 11 zur Abbildungsoptik 2 koaxial ausgerichtet. Sie kann ebensogut auch biaxial zur Abbildungsoptik 2 verlaufen. Ein Teil der Strahlung fällt auf die Zielmarke 1 und wird von ihr reflektiert. Die reflektierte Strahlung 12 wird von der Abbildungsoptik 2 aufgenommen und über den Strahlenteiler 15a auf einem ortsauflösenden optoelektronischen Detektor 4 abgebildet. Anstelle der Strahlenteiler 15a, 15b oder 15c können in bekannter Weise auch Spiegel mit geeignetem Durchmesser verwendet werden.

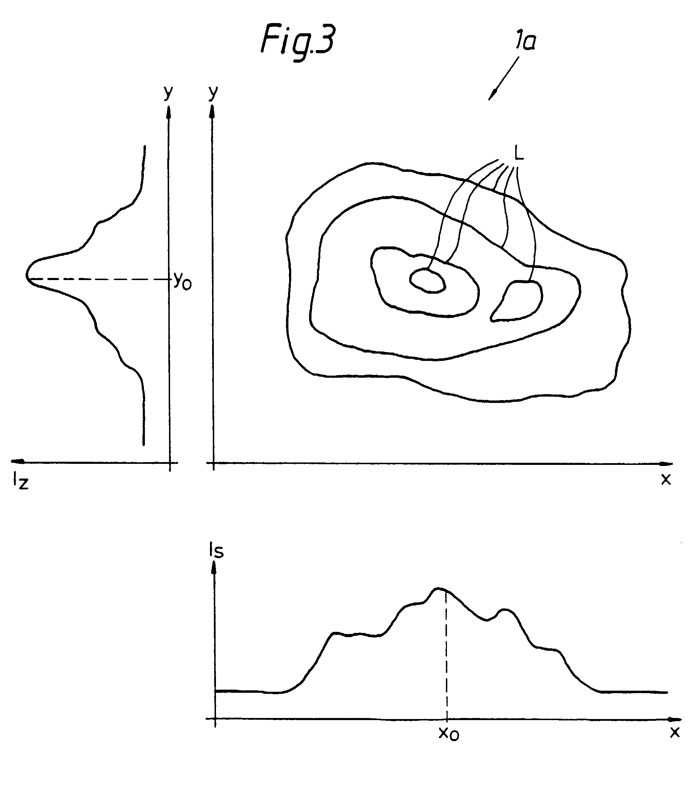

Im allgemeinen befindet sich die Zielmarke 1 nicht auf der optischen Achse 3 der Abbildungsoptik 2. Deshalb bildet die in die Abbildungsoptik 2 einfallende Strahlung 12 mit der optischen Achse 3 einen horizontalen und einen vertikalen Winkel. Dies führt zu einer entsprechenden Lage des Zielmarkenbildes 1a auf dem Detektor 4. Wie ein Zielmarkenbild 1a aussehen kann wird weiter unten in der Beschreibung zu Fig.3 erläutert. Dort wird auch beschrieben, wie die elektrischen Signale des Detektors 4 in einer Vorverarbeitungseinheit 5 ausgewertet werden.

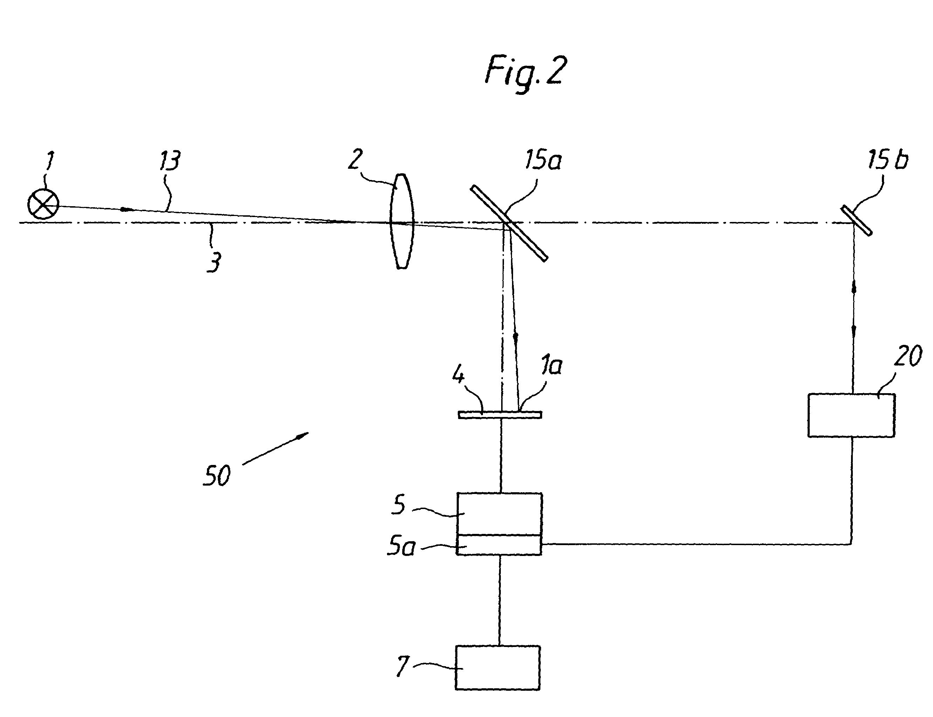

Die von der Vorverarbeitungseinheit 5 gelieferten Daten können in eine externe Recheneinheit 6 zur weiteren Auswertung übertragen werden. Die Recheneinheit 6 kann ein PC sein, der die Daten mittels einer Schnittstelle zur Datenübertragung empfängt. Es kann auch eine Recheneinheit 5a gemäß Fig.2 im Theodoliten 50 integriert sein, die die von der Vorverarbeitungseinheit 5 gelieferten Daten direkt weiterverarbeitet.

In Fig.1 und Fig.2 ist ein optischer Entfernungsmesser 20 eingezeichnet, der optional eingebaut werden kann und der den Theodoliten 50 zu einem Tachymeter erweitert. Bei eingebautem Entfernungsmesser 20 wird dessen Strahlung über einen Strahlenteiler 15c und über die Strahlenteiler 15b und 15a durch die Abbildungsoptik 2 zur Zielmarke 1 geführt, dort reflektiert und in umgekehrter Richtung wieder zurückgeführt. Der ermittelte Entfemungsmeßwert kann ebenfalls zur externen Recheneinheit 6 bzw. zur Recheneinheit 5a übertragen werden. Mit der Entfernung und den Winkelkoordinaten der Zielmarke 1 sind deren dreidimensionale Koordinaten im Raum bestimmt. Diese können im Speicher 7 abgespeichert werden. Bei einer bewegten Zielmarke 1 können somit aus der laufenden Koordinatenmessung die Bahndaten der Zielmarke 1, also Bahnkoordinaten und Bahngeschwindigkeiten, aufgezeichnet werden.

Es versteht sich von selbst, daß die Reihenfolge der Anordnung von Detektor 4, Strahlungsquelle 10 und Entfernungsmesser 20 auch vertauscht sein kann.

Bei manuell zu bedienenden Theodoliten, bei denen kein Detektor 4 integriert ist, wird mit dem Fadenkreuz des Theodolitfernrohres die Zielmarke 1 anvisiert und es werden die Winkelkoordinaten auf Teilkreisen abgelesen. Bei elektronischen Theodoliten 50 kann ein Femrohrokular 30, das zusammen mit der Abbildungsoptik 2 das Theodolitfernrohr bildet, noch zur erstmaligen Ausrichtung des Theodoliten 50 dienen. Da jedoch durch die erfindungsgemäße automatische Erfassung der Zielmarke 1 eine Grobausrichtung des Theodoliten 50 auf die Zielmarke 1 genügt, kann das Femrohrokular 30 auch entfallen.

Mit der Abbildungsoptik 2 gemäß Fig.1 oder Fig.2 kann das Zielmarkenbild 1a durch eine herkömmliche Fokussiereinrichtung scharf abgebildet werden. Da aber die erfindungsgemäße Erfassung der Zielmarke 1 auch bei einem geeigneten fest eingestellten Fokus ohne wesentliche Leistungseinbußen funktioniert, wird die herkömmliche Fokuseinrichtung überflüssig. Sie kann ebenfalls entfallen.

Die Darstellung in Fig.2 unterscheidet sich von der in Fig.1 hauptsächlich darin, daß eine strahlungsemittierende Zielmarke 1 dargestellt ist. Die emittierte Strahlung 13 wird mittels der Abbildungsoptik 2 auf dem Detektor 4 abgebildet. Die Recheneinheit 5a ist direkt an die Vorverarbeitungseinheit 5 gekoppelt und ist integraler Bestandteil des Theodoliten 50.

In der Fig.3 ist im Koordinatensystem x,y des Detektors 4 ein Bild 1a der Zielmarke 1 dargestellt. Jede der in sich geschlossenen Linien L bedeutet jeweils eine konstante Intensität. Die Aufsummierung der Intensitätswerte aller Detektorpixel einer Zeile, also bei einem festen y-Wert, ergibt einen Zeilen-Summenwert. Die Darstellung der Zeilen-Summenwerte aller Zeilen als Funktion von y führt zu der in Fig.3 gezeigten Zeilen-Summenfunktion I_{z}(y). In analoger Weise wird die Spalten-Summenfunktion I_{S}(x) erzeugt. Durch bekannte Methoden der Schwerpunktsbestimmung der Summenfunktionen errechnen sich die Koordinaten x₀, y₀ des Zielmarkenbildes 1a.

Mit diesem in der Vorverarbeitungseinheit 5 ablaufenden Verfahren wird die Erfassung der Zielmarke 1 gegenüber herkömmlicher Bildverarbeitung derart schnell, daß eine automatische Zielmarkenerfassung in einer in der Praxis nahezu unbemerkbaren Zeit erfolgt. Erst dadurch wird bei Bewegung der Zielmarke 1 ihre automatische Verfolgung durch den Theodoliten 50 ermöglicht.

## Patentansprüche

1. Verfahren zur schnellen Erfassung der Lage einer Zielmarke (1) mit Hilfe eines Theodoliten (50) mit einem ortsauflösenden optoelektronischen Detektor (4) mit matrixförmig angeordneten Pixeln , wobei
a) die Zielmarke (1) eine Strahlung emittiert oder eine Beleuchtungsstrahlung reflektiert,
b) die von der Zielmarke (1) kommende Strahlung (12;13) von der Abbildungsoptik (2) und dem Detektor (4) des Theodoliten (50) aufgenommen wird und
c) die Detektorsignale ausgewertet werden,
**dadurch gekennzeichnet,** daß die Detektorsignale einer
Vorverärbeitungseinheit (5) zugeführt werden und daß in der Vorverarbeitungseinheit (5) die von den Pixeln des Detektors (4) detektierten Strahlungsintensitäten zeilenweise und spaltenweise aufsummiert werden, daß aus den Summen der Zeilen eine Zeilensummenfunktion I_{Z}(y) und aus den Summen der Spalten eine Spaltensummenfunktion I_{S}(x) gebildet wird und daß aus der Schwerpunktsbestimmung der Zeilen- und Spaltensummenfunktion die zweidimensionalen Bildkoordinaten (x₀,y₀) der Zielmarke (1) im Koordinatensystem x,y des Detektors (4) ermittelt werden.

2. Verfahren nach Anspruch 1, **dadurch gekennzeichnet,** daß die zweidimensionalen Bildkoordinaten (x₀,y₀) der Zielmarke (1) mit Hilfe von Kalibrierwerten in einen horizontalen und einen vertikalen Winkel zur optischen Achse (3) der Abbildungsoptik (2) umgerechnet werden.

3. Verfahren nach einem der vorherigen Ansprüche, **dadurch gekennzeichnet,** daß aus den Summenfunktionen I_{Z}(y) und I_{S}(x) Streulichtreflexe ermittelt und eliminiert werden.

4. Verfahren nach einem der vorherigen Ansprüche, **dadurch gekennzeichnet**, daß aus einem Verlauf der Summenfunktionen I_{Z}(y) und I_{S}(x) eine Übersteuerung des Detektors (4) ermittelt wird und daraus entsprechende Belichtungsparameter verändert werden.

5. Verfahren nach einem der vorherigen Ansprüche, **dadurch gekennzeichnet,** daß die in der Vorverarbeitungseinheit (5) gebildeten Daten in eine mit ihr direkt gekoppelte Recheneinheit (5a) eingelesen oder in eine externe Recheneinheit (6) übertragen werden.

6. Verfahren nach einem der vorherigen Ansprüche, **dadurch gekennzeichnet,** daß der Detektor (4) wahlweise im Videotakt oder mit einer der jeweiligen Applikation angepaßten Frequenz ausgelesen wird.

7. Verfahren nach einem der vorherigen Ansprüche, **dadurch gekennzeichnet,** daß Abbildungsoptik (2) und Detektor (4) bei sich verändernden Bildkoordinaten (x₀,y₀) einer bewegten Zielmarke (1) automatisch so nachgeführt werden, daß das Zielmarkenbild (1a) die aktive Detektorfläche nicht verläßt.

8. Verfahren nach einem der vorherigen Ansprüche, **dadurch gekennzeichnet,** daß zur 3-dimensionalen Koordinatenbestimmung der Zielmarke (1) im Raum zusätzlich die Entfernung zur Zielmarke (1) mittels eines Entfernungsmeßgerätes (20) ermittelt wird.

9. Verfahren nach einem der vorherigen Ansprüche, **dadurch gekennzeichnet,** daß sukzessiv bestimmte Koordinaten einer bewegten Zielmarke (1) in einem Speicher (7) elektronisch abgespeichert oder permanent aufgezeichnet werden.

10. Vorrichtung zur schnellen Erfassung der Lage einer reflektierenden Zielmarke (1) mit einem Theodoliten (50) mit einer Strahlungsquelle (10) zur Beleuchtung der reflektierenden Zielmarke (1), einer Abbildungsoptik (2) und einem ortsauflösenden optoelektronischen Detektor (4) mit matrixförmig angeordneten Pixeln zur Detektion der von der Zielmarke (1) reflektierten Beleuchtungsstrahlung **gekennzeichnet durch** eine Vorverarbeitungseinheit (5), in der die von den Pixeln des Detektors (4) detektierten Strahlungsintensitäten zeilenweise und spaltenweise aufsummiert werden, aus den Summen der Zeilen eine Zeilensummenfunktion I_{Z}(y) und aus den Summen der Spalten eine Spaltensummenfunktion I_{S}(x) gebildet wird und in der aus der Schwerpunktsbestimmung der Zeilen- und Spaltensummenfunktion die zweidimensionalen Bildkoordinaten (x₀,y₀) der Zielmarke (1) im Koordinatensystem x,y des Detektors (4) ermittelt werden.

11. Vorrichtung nach Anspruch 10, **dadurch gekennzeichnet,** daß die Strahlungsquelle (10) im Strahlengang der Abbildungsoptik (2) integriert ist und daß die Strahlung (11) der Strahlungsquelle (10) die Abbildungsoptik (2) koaxial oder biaxial verläßt.

12. Vorrichtung zur schnellen Erfassung der Lage einer.eine Strahlung (13) emittierenden Zielmarke (1) mit einem Theodoliten (50) mit einer Abbildungsoptik (2) und einem ortsauflösenden optoelektronischen Detektor (4) mit matrixförmig angeordneten Pixeln zur Detektion der emittierten Strahlung (13) **gekennzeichnet durch** eine Vorverarbeitungseinheit (5), in der die von den Pixeln des Detektors (4) detektierten Strahlungsintensitäten zeilenweise und spaltenweise aufsummiert werden, aus den Summen der Zeilen eine Zeilensummenfunktion I_{Z}(y) und aus den Summen der Spalten eine Spaltensummenfunktion I_{S}(x) gebildet wird und in der aus der Schwerpunktsbestimmung der Zeilen- und Spaltensummenfunktion die zweidimensionalen Bildkoordinaten (x₀,y₀) der Zielmarke (1) im Koordinatensystem x,y des Detektors (4) ermittelt werden.

13. Vorrichtung nach einem der Ansprüche 10 bis 12, **dadurch gekennzeichnet,** daß zusätzlich ein Distanzmeßgerät (20) vorgesehen ist.

14. Vorrichtung nach einem der Ansprüche 10 bis 13, **dadurch gekennzeichnet,** daß die Abbildungsoptik (2) einen fest eingestellten Fokus besitzt.

## Claims

1. Process for the rapid detection of the position of a target marking (1) with the aid of a theodolite (50) having a location-resolving optoelectronic detector (4) with pixels arranged in the form of a matrix,
a) the target marking (1) emitting a beam or reflecting a light beam,
b) the beam (12; 13) arriving from the target marking (1) being picked up by the imaging optical system (2) and the detector (4) of the theodolite (50) and
c) the detector signals being evaluated,
characterized in that the detector signals are fed to a preprocessing unit (5) and that, in the preprocessing unit (5), the beam intensities detected by the pixels of the detector (4) are summed line by line and column by column, that a line cumulative function I_{Z}(y) is calculated from the sums of the lines and a column cumulative function I_{S}(x) is calculated from the sums of the columns and that the two-dimensional image coordinates (x₀, y₀) of the target marking (1) in the coordinate system x, y of the detector (4) are determined by determining the centre of gravity of the line and column cumulative functions.

2. Process according to Claim 1, characterized in that the two-dimensional image coordinates (x₀, y₀) of the target marking (1) are converted with the aid of calibration values into a horizontal and a vertical angle relative to the optical axis (3) of the imaging optical system (2).

3. Process according to any of the preceding Claims, characterized in that reflections due to scattered light are determined and eliminated from the cumulative functions I_{z}(y) and Iₛ(x).

4. Process according to any of the preceding Claims, characterized in that blooming of the detector (4) is determined from the curve of the cumulative functions I_{z}(y) and Iₛ(x) and corresponding irradiation parameters are changed therefrom.

5. Process according to any of the preceding Claims, characterized in that the data calculated in the preprocessing unit (5) are read into a calculating unit (5a) coupled directly to it or are transmitted to an external calculating unit (6).

6. Process according to any of the preceding Claims, characterized in that the detector (4) is read out either at video frequency or at a frequency adapted to the respective application.

7. Process according to any of the preceding Claims, characterized in that, in the case of changing image coordinates (x₀, y₀) of a moving target marking (1), imaging optical system (2) and detector (4) are caused to track automatically so that the image (1a) of the target marking does not leave the active detector area.

8. Process according to any of the preceding Claims, characterized in that, for the determination of the three-dimensional coordinates of the target marking (1) in space, the distance to the target marking (1) is additionally determined by means of a distance-measuring device (20).

9. Process according to any of the preceding Claims, characterized in that successively determined coordinates of a moving target marking (1) are electronically stored in a memory (7) or continuously recorded.

10. Device for the rapid detection of the position of a reflecting target marking (1), comprising a theodolite (50) having a radiation source (10) for illuminating the reflecting target marking (1), an imaging optical system (2) and a location-resolving optoelectronic detector (4) with pixels arranged in the form of a matrix for the detection of the incident light beam reflected by the target marking (1), characterized by a preprocessing unit (5) in which the beam intensities detected by the pixels of the detector (4) are summed line by line and column by column and a line cumulative function I_{Z}(y) is calculated from the sums of the lines and a column cumulative function I_{S}(x) is calculated from the sums of the columns and in which the two-dimensional image coordinates (x₀, y₀) of the image marking (1) in the coordinate system x, y of the detector (4) are determined from the determination of the centre of gravity of the line and column cumulative functions.

11. Device according to Claim 10, characterized in that the radiation source (10) is integrated in the beam path of the imaging optical system (2) and that the radiation (11) of the radiation source (10) leaves the imaging optical system (2) coaxially or biaxially.

12. Device for the rapid detection of the position of a target marking (1) emitting a beam (13), comprising a theodolite (50) having an imaging optical system (2) and a location-resolving optoelectronic detector (4) with pixels arranged in the form of a matrix for the detection of the emitted beam (13), characterized by a preprocessing unit (5) in which the beam intensities detected by the pixels of the detector (4) are summed line by line and column by column and a line cumulative function I_{z}(y) is calculated from the sums of the lines and a column cumulative function Iₛ(x) is calculated from the sums of the columns and in which the two-dimensional image coordinates (x₀, y₀) of the target marking (1) in the coordinate system x, y of the detector (4) are determined from the determination of the centre of gravity of the line and column cumulative functions.

13. Device according to any of Claims 10 to 12, characterized in that a distance-measuring device (20) is additionally provided.

14. Device according to any of Claims 10 to 13, characterized in that the imaging optical system (2) has a fixed focus.

## Revendications

1. Procédé de détection rapide de la position d'un repère cible (1) à l'aide d'un théodolite (50), avec un détecteur (4) optoélectronique, présentant une résolution locale, à pixels disposés en matrice, où
a) le repère cible (1) émet un rayonnement ou bien réfléchit un rayonnement d'illumination,
b) le rayonnement (12;13) venant du repère cible (1) est capté par l'optique de représentation (2) et le détecteur (4) du théodolite (50), et
c) les signaux du détecteur sont évalués,
caractérisé en ce que les signaux du détecteur sont amenés à une unité de prétraitement (5), et en ce que, dans l'unité de prétraitement (5), les intensités de rayonnement ayant été détectées à partir des pixels du détecteur (4) sont additionnées ligne par ligne et colonne par colonne, en ce qu'à partir des sommes des lignes est constituée une fonction de sommation de ligne I_{z}(y) et, à partir des sommes des colonnes, est constituée une fonction de sommation des colonnes Iₛ(x), et en ce que, à partir de la détermination du centre de gravité de la fonction de sommation de ligne et de colonne, on détermine les coordonnées image (x₀,y₀) bidimentionnelles du repère cible (1) dans le système de coordonnées x,y du détecteur (4).

2. Procédé selon la revendication 1, caractérisé en ce que les coordonnées image (x₀,y₀) bidimentionnelles du repère cible (1) sont converties, à l'aide de valeurs d'étalonnage, en un angle oriental et en un angle vertical par rapport à l'axe optique (3) de l'optique de représentation (2).

3. Procédé selon l'une des revendications précédentes, caractérisé en ce que les réflections de lumière de dispersion sont déterminées et éliminées à partir des fonctions de sommation I_{z}(y) et Iₛ(x).

4. Procédé selon l'une des revendications précédentes, caractérisé en ce qu'à partir d'une allure des fonctions de sommation I_{z}(y) et Iₛ(x), on détermine une surmodulation du détecteur (4) et, à partir de cela, on modifie des paramètres d'illumination correspondants.

5. Procédé selon l'une des revendications précédentes, caractérisé en ce que les données constituées dans l'unité de prétraitement (5) sont mémorisées dans une unité de calcul (5a) lui étant directement couplée, ou bien transmises dans une unité de calcul (6) externe.

6. Procédé selon l'une des revendications précédentes, caractérisé en ce que le détecteur (4) est soumis à une lecture, au choix à la cadence vidéo, ou bien à une fréquence adaptée à l'application spécifique.

7. Procédé selon l'une des revendications précédentes, caractérisé en ce que l'optique de représentation (2) et le détecteur (4), lorsqu'il y a variation des coordonnées image (x₀,y₀) d'un repère cible (1) ayant été déplacé, sont recentrées automatiquement de manière que l'image de repère cible (la) ne quitte pas la surface active du détecteur.

8. Procédé selon l'une des revendications précédentes, caractérisé en ce que, pour effectuer une détermination tridimensionnelle des coordonnées du repère cible (1) dans l'espace, on détermine en plus la distance par rapport au repère cible (1), au moyen d'un appareil de mesure de distance (20).

9. Procédé selon l'une des revendications précédentes, caractérisé en ce que l'on mémorise électroniquement ou l'on enregistre de façon permanente, dans une mémoire (7), des coordonnées, déterminées successivement, d'un repère cible (1) déplacé.

10. Dispositif de détection rapide de la position d'un repère cible (1) réfléchissant avec un théodolite (50), avec une source de rayonnement (10) pour illuminer le repère cible (1) réfléchissant, une optique de représentation (2) et un détecteur optoélectronique (4) présentant une résolution locale, avec des pixels disposés en matrice, pour assurer la détection du rayonnement d'illumination réfléchi par le repère cible (1), caractérisé par une unité de prétraitement (5), dans laquelle des intensités de rayonnement, ayant été détectées par les pixels du détecteur (4), sont additionnées ligne par ligne et colonne par colonne, une fonction de sommation de ligne I_{Z}(y) étant constituée à partir des sommes des lignes, et une fonction de sommation des colonnes I_{S}(x) étant constituée à partir des sommes des colonnes, et les coordonnées image (x₀,y₀) bidimentionnelles du repère cible (1) étant déterminées dans le système de coordonnées x,y du détecteur (4), à partir de la détermination du centre de gravité de la fonction de sommation de ligne et de colonne.

11. Dispositif selon la revendication 10, caractérisé en ce que la source de rayonnement (10) est intégrée dans le chemin de rayonnement de l'optique de représentation (2) et en ce que le rayonnement (11) de la source de rayonnement (10) quitte l'optique de représentation (2) coaxialement ou biaxialement.

12. Dispositif de détection rapide de la position d'un repère cible (1) émettant un rayonnement (13), avec un théodolite (50) ayant une optique de représentation (2) et un détecteur optoélectronique (4) présentant une résolution locale, avec des pixels disposés en matrice pour assurer la détection du rayonnement (13) émis, caractérisé par une unité de prétraitement (5), dans laquelle les intensités de rayonnement ayant été détectées par les pixels du détecteur (4) sont additionnées ligne par ligne et colonne par colonne, une fonction de sommation des lignes I_{z}(y) étant constituée, à partir des sommes des lignes, et une fonction de sommation des colonnes Iₛ(x) étant formée, à partir des sommes des colonnes, et les coordonnées image (x₀,y₀) bidimentionnelles du repère cible (1) dans le système de coordonnées x,y du détecteur (4) étant déterminées à partir de la détermination du centre de gravité de la fonction de sommation des lignes et des colonnes.

13. Dispositif selon l'une des revendications 10 à 12, caractérisé en ce qu'en plus est prévu un appareil de mesure de distance (20).

14. Dispositif selon l'une des revendications 10 à 13, caractérisé en ce que l'optique de représentation (2) est d'une distance focale à réglage fixe.
